# EUROPÄISCHE PATENTANMELDUNG

(11) **EP 4 272 911 A1**
(43) Veröffentlichungstag der Anmeldung: **08.11.2023**
(21) Anmeldenummer: 23170165.7
(22) Anmeldetag: 26.04.2023
(51) Int. Cl.: B25J 19/00, B25J 19/06

(54) **SCHUTZELEMENT FÜR EINE SCHUTZVORRICHTUNG EINES INDUSTRIEROBOTERS, SCHUTZVORRICHTUNG FÜR EINEN INDUSTRIEROBOTER UND INDUSTRIEROBOTER**

(30) Priorität: 05.05.2022 DE 102022204452
(71) Anmelder: Dr. Doll Engineering GmbH, 74193 Schwaigern (DE)
(72) Erfinder: Doll, Sven, 76131 Karlsruhe (DE)
(74) Vertreter: Patentanwälte Ruff, Wilhelm, Beier, Dauster & Partner mbB

(57) **Zusammenfassung**

Die Erfindung betrifft Schutzelement (1) für eine Schutzvorrichtung (2) eines Industrieroboters (3), aufweisend eine Unterschale (4), welche zum Aufbringen auf einen Außenwandabschnitt (5) des Industrieroboters eingerichtet ist, eine Oberschale (6, 6'), welche entlang einer Hochachse (H_{A}) von der Unterschale beabstandet angeordnet ist, wenigstens zwei elastisch deformierbare sowie elektrisch leitfähige Deformationselemente (7, 7a, 7b, 7c), welche entlang einer quer zu der Hochachse orientierten Querachse (Q_{A}) nebeneinander zwischen der Unterschale und der Oberschale angeordnet sind und mittels derer die Oberschale wenigstens abschnittsweise auf der Unterschale abgestützt ist, wobei die wenigstens zwei Deformationselemente unter Einwirkung einer auf die Oberschale einwirkenden Kraft elastisch deformierbar sind zwischen einem Trennzustand, in welchem die wenigstens zwei Deformationselemente entlang der Querachse unter Ausbildung eines Querspalts (8) angeordnet und elektrisch voneinander getrennt sind, und einem Schließzustand, in welchem die wenigstens zwei Deformationselemente jeweils entlang der Hochachse elastisch zusammengedrückt und entlang der Querachse elastisch ausgedehnt sind, wodurch der Querspalt geschlossen und ein elektrischer Kontakt zwischen den wenigstens zwei Deformationselemente ausgebildet ist.

## Beschreibung

Die Erfindung betrifft ein Schutzelement für eine Schutzvorrichtung eines Industrieroboters, eine Schutzvorrichtung mit einem solchen Schutzelement und einen Industrieroboter mit einer solchen Schutzvorrichtung.

Industrieroboter werden vermehrt als kooperierende Industrieroboter eingesetzt. Als kooperierende Industrieroboter werden im industriellen Bereich eingesetzte Roboter bezeichnet, die mit einer Person in einem gemeinsamen Arbeitsbereich zusammenarbeiten. Dabei wird üblicherweise auf physische Abschirmungen, wie beispielsweise Zäune, Absperrgitter oder dergleichen, zwischen der Person und dem Roboter verzichtet. Mangels einer solchen Abschirmung kann es grundsätzlich zu einer Kollision zwischen dem Roboter und der Person kommen, beispielsweise wenn diese unkoordiniert in einen Verschwenkbereich des Roboters eingreift. Um Personenschäden zu vermeiden und eine ausreichende Arbeitssicherheit zu gewährleisten, sind Schutzvorrichtungen erforderlich, die eine solche Kollision detektieren, um beispielsweise eine Notabschaltung des Roboters zu ermöglichen.

Eine derartige Schutzvorrichtung ist aus der DE 10 2017 218 229 A1 bekannt und weist wenigstens ein Schutzelement auf, das zum Aufbringen auf einen Außenwandabschnitt des Industrieroboters vorgesehen ist. Das bekannte Schutzelement weist eine Unterschale und eine Oberschale auf. Sowohl die Oberschale als auch die Unterschale sind elektrisch leitfähig. Die Oberschale gibt bei einer Kollision elastisch nach und ist auf diese Weise mit der Unterschale elektrisch kontaktierbar. Bei der bekannten Schutzvorrichtung ist das Schutzelement mittels Thermoformens gefertigt. Zudem ist eine Steuereinheit vorgesehen, die mit dem Schutzelement verbunden und zum Steuern des Industrieroboters in Abhängigkeit eines elektrischen Kontaktzustands des Schutzelements eingerichtet ist.

Aufgabe der Erfindung ist es, ein Schutzelement für eine Schutzvorrichtung eines Industrieroboters, eine Schutzvorrichtung und einen Industrieroboter bereitzustellen, welche Vorteile, insbesondere hinsichtlich Funktionsweise, Aufbau, Herstellung und/oder Betriebszuverlässigkeit, gegenüber dem Stand der Technik bieten.

Diese Aufgabe wird für das Schutzelement durch die Merkmale des Anspruchs 1, für die Schutzvorrichtung durch die Merkmale des Anspruchs 14 und für den Industrieroboter durch die Merkmale des Anspruchs 15 gelöst. Vorteilhafte Ausgestaltungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Das erfindungsgemäße Schutzelement weist eine Unterschale, welche zum Aufbringen auf einen Außenwandabschnitt des Industrieroboters eingerichtet ist, und eine Oberschale auf, welche entlang einer Hochachse von der Unterschale beabstandet angeordnet ist. Das Schutzelement weist weiter wenigstens zwei elastisch deformierbare sowie elektrisch leitfähige Deformationselemente auf, welche entlang einer quer zu der Hochachse orientierten Querachse nebeneinander zwischen der Unterschale und der Oberschale angeordnet sind und mittels derer die Oberschale wenigstens abschnittsweise auf der Unterschale abgestützt ist. Dabei sind die wenigstens zwei Deformationselemente unter Einwirkung einer auf die Oberschale einwirkenden Kraft elastisch deformierbar zwischen einem Trennzustand und einem Schließzustand. In dem Trennzustand sind die wenigstens zwei Deformationselemente entlang der Querachse unter Ausbildung eines Querspalts angeordnet und elektrisch voneinander getrennt. Dieser Trennzustand liegt grundsätzlich während des Betriebs des Industrieroboters vor, wenn auf die Oberschale des Schutzelements entweder keine Kraft oder keine ausreichend große Kraft wirkt. Wirkt jedoch auf die Oberschale des Schalelements eine definierte, ausreichend große Kraft, werden die wenigstens zwei Deformationselemente von dem Trennzustand in den Schließzustand überführt. In dem Schließzustand sind die wenigstens zwei Deformationselemente jeweils entlang der Hochachse derart elastisch zusammengedrückt und entlang der Querachse elastisch ausgedehnt, so dass der Querspalt geschlossen und ein elektrischer Kontakt zwischen den wenigstens zwei Deformationselemente ausgebildet ist. In anderen Worten: eine Deformation der wenigstens zwei Deformationselemente entlang der Hochachse bewirkt eine Deformation der wenigstens zwei Deformationselemente entlang der Querachse. Hierbei kann "zusammengedrückt" insbesondere auch als zusammengequetscht, zusammengepresst und/oder zusammengezwängt bezeichnet werden. Unter einer Ausdehnung der wenigstens zwei Deformationselemente entlang der Querachse kann eine Zunahme einer Abmessung entlang der Querachse, d.h. einer Breite, insbesondere eines Durchmessers, oder eine Ausweichbewegung infolge einer Abnahme einer Abmessung entlang der Hochachse verstanden werden. Damit kann "ausgedehnt" insbesondere auch als gebogen, ausgebeult und/oder geknickt bezeichnet werden. Die elastisch deformierbare Gestaltung der wenigstens zwei Deformationselemente ermöglicht ein nahezu beliebig einstellbares "Nachlaufen" des Industrieroboters, so dass bspw. eine geringfügig zeitverzögerte Abschaltung im Kollisionsfall ausgeglichen und ein "harter" Aufprall vermieden werden können. Der elektrische Kontakt kann z.B. eine Notabschaltung des Industrieroboters auslösen. Demnach kann das Schutzelement als eine Art Schalter in einem zur Notabschaltung des Industrieroboters eingerichteten Stromkreis wirken. Die Unterschale und die Oberschale sind bei einer Ausgestaltung formstabil ausgebildet. Vorzugsweise ist die Unterschale formnachgiebig. Hierdurch kann ein möglichst vollflächiger Kontakt der Unterschale mit dem Außenwandabschnitt des Industrieroboters erreicht werden. Dies gewährleistet eine funktionsgerechte Kraftübertragung im Falle einer Kollision, so dass die Oberschale im Kollisionsfall besonders zuverlässig eine Deformation und damit den Schließzustand bzw. einen elektrischen Kontakt der wenigstens zwei Deformationselemente hervorruft. Die Oberschale ist vorzugsweise elastisch deformierbar ausgebildet. Dabei kann die elastische Deformierbarkeit der Oberschale werkstoffbedingt oder gestaltungsbedingt sein, insbesondere durch eine dünnwandige Gestaltung der Oberschale, sein. Die Unterschale und die Oberschale sind vorzugsweise aus einem elektrisch isolierenden Material, insbesondere Kunststoff, gefertigt. Die Hochachse und die quer zu der Hochachse orientierte Querachse sind vorzugsweise orthogonal zueinander ausgerichtet. Die wenigstens zwei Deformationselemente sind wenigstens schicht- und/oder abschnittsweise aus einem elektrisch leitfähigen Material, wie Metall oder einen leitfähigen Kunststoff, ausgebildet. Bei einer Ausgestaltung sind die wenigstens zwei Deformationselemente aus einem elektrisch isolierenden Material gefertigt und weisen lediglich eine elektrisch leitfähige Beschichtung auf.

In Ausgestaltung der Erfindung sind die wenigstens zwei Deformationselemente jeweils entlang einer quer zu der Hochachse und der Querachse orientierten Längsachse längserstreckt. Die Längsachse bildet vorzugsweise mit der Hochachse und der Querachse ein orthogonales Koordinatensystem. Vorzugsweise sind die wenigstens zwei Deformationselemente jeweils im Wesentlichen über eine gesamte Länge des Schutzelements längserstreckt. Bei einer Ausführungsform können die wenigstens zwei Deformationselemente jeweils eine zylindrische, insbesondere hohlzylindrische, Form aufweisen. Bei einer weiteren Ausführungsform können die wenigstens zwei Deformationselemente jeweils eine elastisch deformierbare Füllstruktur aufweisen, die vorzugsweise gitter-, waben-, wellen-, maschen- und/oder netzartig gestaltet ist.

In weiterer Ausgestaltung der Erfindung weisen die wenigstens zwei Deformationselemente jeweils eine runde, insbesondere kreisrunde, Querschnittsform auf. Zusätzlich oder alternativ weisen die wenigstens zwei Deformationselemente jeweils eine hohle, insbesondere ringförmige, insbesondere kreisringförmige, Querschnittsform auf. Bei alternativen Ausführungsformen kann die Querschnittsform auch elliptisch, polygonal oder bogenförmig sein.

In weiterer Ausgestaltung der Erfindung sind die wenigstens zwei Deformationselemente jeweils schichtweise additiv ausgebildet. Hierdurch kann eine weiter vereinfachte und besonders flexible Herstellung erreicht werden. Zur additiven Ausbildung der wenigstens zwei Deformationselemente kommt ein hierfür geeignetes 3D-Druckverfahren zum Einsatz. Als geeignete Verfahren sind insbesondere Filament-3D-Druckverfahren zu nennen, die auch unter den Bezeichnungen "Fused Deposition Modeling" oder "Fused Filament Fabrication" bekannt sind.

In weiterer Ausgestaltung der Erfindung sind die wenigstens zwei Deformationselemente jeweils aus einem elektrisch leitfähigen Kunststoff ausgebildet. Hierfür kann der Kunststoff der wenigstens zwei Deformationselemente einen elektrisch leitfähigen Zuschlagsstoff aufweisen, wie beispielsweise Graphit, Metallpartikel oder dergleichen. Bei einer alternativen Ausführungsform sind die wenigstens zwei Deformationselemente wenigstens schicht- und/oder abschnittsweise aus einem elektrisch leitfähigen Material, insbesondere Kunststoff, ausgebildet. Hierbei kann z.B. ein elektrisch isolierendes Material eine elektrisch leitfähige Beschichtung aufweisen.

In weiterer Ausgestaltung der Erfindung ist die Oberschale und/oder die Unterschale schichtweise additiv ausgebildet. Hierdurch kann ebenfalls eine weiter vereinfachte und besonders flexible Herstellung erreicht werden. Durch die additive Ausbildung der Unterschale kann deren Gestaltung auf besonders einfache Weise an eine Oberflächenkontur des jeweiligen Außenwandabschnitts des Industrieroboters angepasst werden. Zur additiven Ausbildung der Oberschale und/oder der Unterschale kommt ein hierfür geeignetes 3D-Druckverfahren zum Einsatz. Als geeignete Verfahren sind analog zur additiven Ausbildung der wenigstens zwei Deformationselemente insbesondere Filament-3D-Druckverfahren zu nennen. Eine schichtweise additive Fertigung der Oberschale und/oder der Unterschale bietet besondere Vorteile, ist aber nicht unbedingt erforderlich. Alternativ zu einer solchen additiven Fertigung kann die Oberschale und/oder die Unterschale aus einer Plattenware oder aus einem Schaumstoff gefertigt sein.

In weiterer Ausgestaltung der Erfindung ist die Oberschale und/oder die Unterschale jeweils aus einem elektrisch isolierenden Kunststoff ausgebildet. Bei einer alternativen Ausführungsform sind die Oberschale und/oder die Unterschale jeweils wenigstens schicht- und/oder abschnittsweise, insbesondere in Kontaktbereichen zu den wenigstens zwei Deformationselemente, aus einem elektrisch isolierenden Material, insbesondere Kunststoff, ausgebildet.

In weiterer Ausgestaltung der Erfindung sind die wenigstens zwei Deformationselemente jeweils mit der Oberschale und/oder der Unterschale einstückig zusammenhängend verbunden. Bei einer Ausgestaltung der Erfindung ist vorzugsweise das gesamte Schutzelement einstückig mittels 3D-Druck gefertigt. Neben der bereits erwähnten besonders einfachen und flexiblen Herstellung ergeben sich durch die besagte Einstückigkeit des Schutzelements besondere sicherheitstechnische Vorteile gegenüber einer mehrteiligen Ausbildung des Schutzelements.

In weiterer Ausgestaltung der Erfindung ist die Oberschale elastisch deformierbar. Dabei kann die elastische Deformierbarkeit der Oberschale werkstoffbedingt oder gestaltungsbedingt sein, z.B. durch eine dünnwandige Gestaltung der Oberschale. Vorzugsweise ist die Oberschale aus einem elastisch deformierbaren Kunststoff, insbesondere thermoplastischen Elastomer, ausgebildet.

In weiterer Ausgestaltung der Erfindung weist die Oberschale eine Gesamtdicke von 0,4 mm bis 2,0 mm, vorteilhaft von 0,8 mm bis 1,6 mm, besonders vorteilhaft von 1,2 mm, auf. Durch die Wahl der Gesamtdicke der elastisch deformierbaren Oberschale kann die zur elektrischen Kontaktierung erforderliche Kraft beeinflusst werden. Eine Gesamtdicke von 0,4 mm bis 2,0 mm ermöglicht eine elastische Deformierbarkeit der Oberschale bei bereits vergleichsweise geringen Kräften. Hierdurch kann eine Kollision besonders zuverlässig detektiert werden. Die Erfinder haben erkannt, dass eine Gesamtdicke von 0,4 mm bis 2,0 mm, vorteilhaft von 0,8 mm bis 1,6 mm, besonders vorteilhaft von 1,2 mm, besondere Vorteile bietet. Vorzugsweise weist die Unterschale eine Gesamtdicke von 0,4 mm bis 2,0 mm, vorteilhaft von 0,8 mm bis 1,6 mm, besonders vorteilhaft von 1,2 mm, auf.

In weiterer Ausgestaltung der Erfindung sind wenigstens die Oberschale und die wenigstens zwei Deformationselemente aus gleichartigen Kunststoffen ausgebildet sind. Dabei weist der Kunststoff der wenigstens zwei Deformationselemente einen elektrisch leitfähigen Zuschlagsstoff auf, wie beispielsweise Graphit, Metallpartikel oder dergleichen. Vorzugsweise sind die Oberschale und die wenigstens zwei Deformationselemente jeweils aus einem thermoplastischen Elastomer, insbesondere auf Urethanbasis, ausgebildet.

In weiterer Ausgestaltung der Erfindung weist der Kunststoff der Oberschale und/oder der Kunststoff der wenigstens zwei Deformationselemente eine Shorehärte von 35 Shore-A bis 100 Shore-A, vorteilhaft von 70 Shore-A bis 80 Shore-A, besonders vorteilhaft von 75 Shore-A, auf. Durch die Wahl der Shorehärte des jeweiligen Kunststoffs kann die elastische Deformierbarkeit der Oberschale und/oder der wenigstens zwei Deformationselemente beeinflusst werden. Dies beeinflusst wiederum die zur elektrischen Kontaktierung erforderliche Kraft. Die Erfinder haben erkannt, dass eine Shorehärte von 35 Shore-A bis 100 Shore-A, vorteilhaft von 70 Shore-A bis 80 Shore-A, für den vorliegenden Anwendungsfall Vorteile bietet. Besonders vorteilhaft ist eine Shorehärte von 75 Shore-A.

In weiterer Ausgestaltung der Erfindung ist das Schutzelement plattenförmig ausgebildet und weist eine rechteckige Grundform auf. Durch die plattenförmige Ausbildung kann Bauraum eingespart und eine möglichst schlanke Silhouette des Industrieroboters beibehalten werden. Sofern mehrere Schutzelemente vorgesehen sind, ermöglicht die rechteckige Grundform eine möglichst vollflächige Abdeckung der kollisionsträchtigen Außenwand des Industrieroboters.

Die erfindungsgemäße Schutzvorrichtung für einen Industrieroboter weist wenigstens ein erfindungsgemäßes Schutzelement auf. Weiter weist die Schutzvorrichtung eine Steuereinheit auf, die mit dem wenigstens einen Schutzelement verbunden und zum Steuern des Industrieroboters in Abhängigkeit des elektrischen Kontakts des Schutzelements eingerichtet ist. Die Steuereinheit ist zur Abgabe wenigstens eines Steuersignals in Abhängigkeit des elektrischen Kontaktzustands des wenigstens einen Schutzelements eingerichtet. Beispielsweise kann die Steuereinheit zum Steuern, insbesondere Abschalten, einer Bewegung des Industrieroboters in Abhängigkeit des elektrischen Kontaktzustands eingerichtet sein. Die Steuereinheit kann drahtgebunden oder drahtlos mit dem wenigstens einen Schutzelement verbunden sein. Bei einer Ausführungsform sind mehrere Schutzelemente vorgesehen und vorzugsweise mittels randseitig angeordneter und additiv ausgebildeter Scharnierabschnitte einstückig zusammenhängend und scharnierbeweglich miteinander verbunden.

Die erfindungsgemäße Lösung eignet sich in besonders bevorzugter Weise für einen Industrieroboter in Gestalt eines Gelenkarmroboters. Die erfindungsgemäße Lösung kann aber auch für sonstige ortsfeste Einrichtungen, bewegliche Handhabungsgeräte, selbstfahrende Flurförderfahrzeuge oder dergleichen verwendet werden.

Der erfindungsgemäße Industrieroboter, insbesondere Gelenkarmroboter, weist eine erfindungsgemäße Schutzvorrichtung auf.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematisch stark vereinfachter Darstellung eine Ausführungsform eines erfindungsgemäßen Industrieroboters mit einer Ausführungsform einer erfindungsgemäßen Schutzvorrichtung, welche eine Ausführungsform eines erfindungsgemäßen Schutzelements aufweist,
- Fig. 2: schematisch in einer Perspektivdarstellung das Schutzelement nach Fig. 1,
- Fig. 3: in schematisch stark vereinfachter Schnittdarstellung das Schutzelement entlang einer Linie III-III nach Fig. 2, wobei zwischen einer Unterschale und einer Oberschale mehrere Deformationselemente einen Trennzustand einnehmen,
- Fig.4: in schematisch stark vereinfachter Schnittdarstellung das Schutzelement entlang einer Linie IV-IV nach Fig. 3,
- Fig. 5: die Schnittdarstellung des Schutzelements nach Fig. 3, wobei auf die Oberschale eine Druckkraft anliegt und die mehreren Deformationselemente einen Schließzustand einnehmen,
- Fig. 6: in schematisch stark vereinfachter Schnittdarstellung das Schutzelement entlang einer Linie VI-VI nach Fig. 5,
- Fig. 7: in einer Schnittdarstellung entsprechend Fig. 3 eine weitere Ausführungsform eines erfindungsgemäßen Schutzelements mit einer elastisch deformierbaren Oberschale, wobei zwei der mehreren Deformationselemente einen Schließzustand einnehmen, und
- Fig. 8A bis 8C: je eine schematisch stark vereinfachte Schnittdarstellung zur Veranschaulichung unterschiedlicher Querschnittsformen der Deformationselemente.

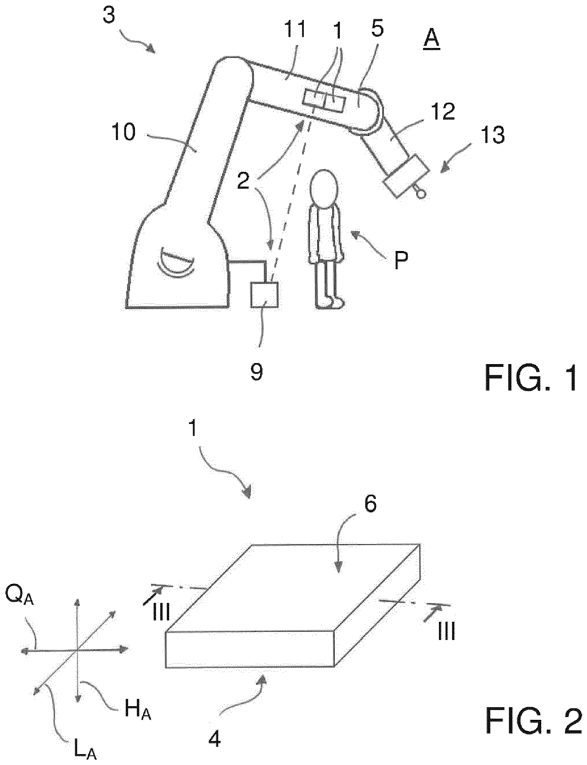

Ein Industrieroboter 3 nach Fig. 1 ist in Form eines Gelenkarmroboters zum automatisierten Ausführen von Fertigungs- und/oder Handhabungsschritte in einer industriellen Fertigung eingerichtet. Der Industrieroboter 3 ist schematisch stark vereinfacht dargestellt und weist einen grundsätzlich bekannten Aufbau mit mehreren relativ zueinander gelenkbeweglichen Gelenkarmen 10, 11, 12 und einem endseitig des Gelenkarms 12 angeordneten Endeffektor 13 auf. Der Endeffektor 13 ist mittels einer gelenkbeweglichen Relativverlagerung der Gelenkarme 10, 11, 12 innerhalb eines Arbeitsraums A verlagerbar.

Bei der gezeigten Ausführungsform ist der Industrieroboter 3 zur Zusammenarbeit mit einer in dem Arbeitsbereich A befindlichen Person P vorgesehen (Fig. 1) und kann insoweit auch als kooperierender Industrieroboter bezeichnet werden. Die Person P ist bei der gezeigten Ausführungsform nicht durch physische Abschirmung, wie Zäune, Absperrgitter oder dergleichen von dem Industrieroboter 3 abgeschirmt. Mangels einer solchen Abschirmung besteht grundsätzlich eine Kollisionsgefahr zwischen der Person P und dem Industrieroboter 3, beispielsweise bei einem unkoordinierten Eingriff der Person P in den Arbeitsbereich A oder bei einer fehlerhaften Bewegung der Gelenkarme 10, 11, 12. Bei einer solchen Kollision kann die Person P Schaden nehmen. Um Personenschäden entgegenzuwirken, weist der Industrieroboter 3, vorliegend im Speziellen der Gelenkarm 11, eine Schutzvorrichtung 2 auf. Die Schutzvorrichtung 2 weist gemäß der gezeigten Ausführungsform der Fig. 1 mehrere Schutzelemente 1 und eine Steuereinheit 9 auf. Die Schutzelemente 1 und die Steuereinheit 9 sind anhand Fig. 1 lediglich schematisch dargestellt. Insbesondere die gezeigte Anzahl der Schutzelemente 1 und deren Anordnung an dem Gelenkarm 11 sind als rein exemplarisch zu erachten. Bei zeichnerisch nicht dargestellten Ausführungsformen können mehr oder weniger Schutzelemente 1 vorgesehen und an anderen oder zusätzlichen Bereichen des Industrieroboters 3 angeordnet sein. Bei einer Ausführungsform mit mehreren Schutzelementen 1 können diese vorzugsweise mittels randseitig angeordneter und additiv ausgebildeter Scharnierabschnitte einstückig zusammenhängend und scharnierbeweglich miteinander verbunden sein.

Die mehreren Schutzelemente 1 sind hinsichtlich ihrer Gestaltung und Funktionsweise identisch, so dass zur Vermeidung von Wiederholungen nachfolgend insbesondere anhand der Fig. 2 bis 8C lediglich auf ein eines der Schutzelemente 1 eingegangen wird.

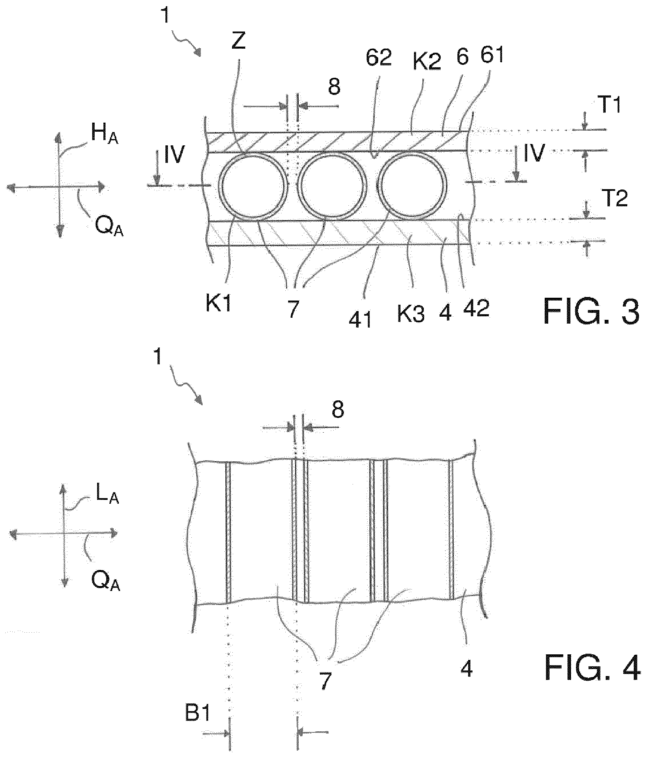

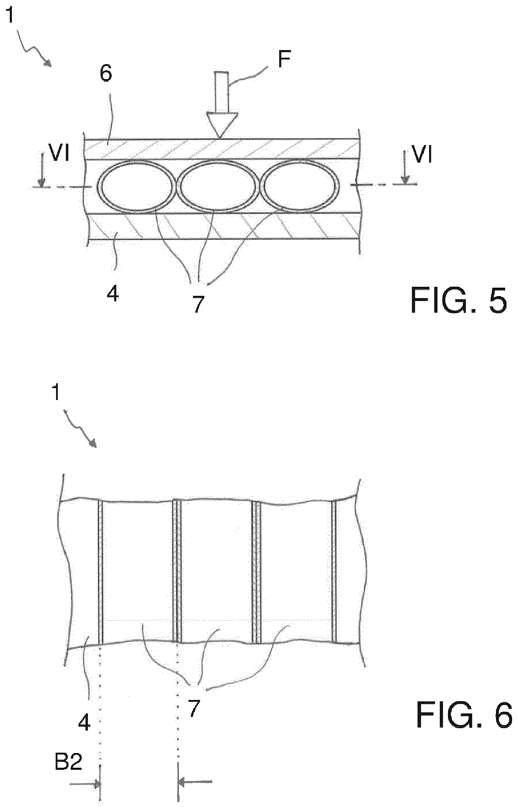

Das Schutzelement 1 weist eine Unterschale 4 und eine Oberschale 6 auf, wie in der Fig. 2 ersichtlich ist. Die Unterschale 4 ist zum Aufbringen auf einen Außenwandabschnitt 5 des Industrieroboters 3, beispielsweise im Bereich der Gelenkarme 10, 11, 12, eingerichtet. Die Oberschale 6 ist entlang einer Hochachse H_{A} von der Unterschale 4 beabstandet angeordnet. Das Schutzelement 1 weist weiter wenigstens zwei elastisch deformierbare sowie elektrisch leitfähige Deformationselemente 7 auf. Die Deformationselemente 7 sind entlang einer quer zu der Hochachse H_{A} orientierten Querachse Q_{A} nebeneinander zwischen der Unterschale 4 und der Oberschale 6 angeordnet. Die Oberschale 6 ist wenigstens abschnittsweise mittels der Deformationselemente 7 auf der Unterschale 4 abgestützt, wie in der Fig. 3 ersichtlich ist. Zudem sind die wenigstens zwei Deformationselemente 7 unter Einwirkung einer auf die Oberschale 6 einwirkenden Kraft elastisch deformierbar zwischen einem Trennzustand und einem Schließzustand. In dem Trennzustand sind die wenigstens zwei Deformationselemente 7 entlang der Querachse Q_{A} unter Ausbildung eines Querspalts 8 angeordnet und elektrisch voneinander getrennt, wie in den Fig. 3 und 4 ersichtlich ist. Der Trennzustand liegt grundsätzlich während des Betriebs des Industrieroboters 3 vor, wenn auf die Oberschale 6 entweder keine Kraft oder keine ausreichend große Kraft wirkt. Wirkt jedoch auf die Oberschale 6 eine definierte, ausreichend große Kraft, werden die wenigstens zwei Deformationselemente 7 von dem Trennzustand in den Schließzustand überführt. In dem Schließzustand sind die wenigstens zwei Deformationselemente 7 jeweils entlang der Hochachse H_{A} durch eine Druckkraft F elastisch zusammengedrückt und entlang der Querachse Q_{A} elastisch ausgedehnt, so dass sich eine jeweilige Abmessung der Deformationselemente 7 entlang der Querachse Q_{A}, d.h. eine Breite, insbesondere ein Durchmesser, infolge einer Abnahme einer jeweiligen Abmessung entlang der Hochachse H_{A} ändert. Vorliegend weisen die Deformationselemente 7 jeweils im Trennzustand ohne Krafteinwirkung eine Breite B1 auf, wie in der Fig. 4 ersichtlich ist. Gemäß Fig. 6 weisen die Deformationselemente 7 jeweils im Schließzustand und/oder unter Krafteinwirkung eine Breite B2 auf, die gegenüber der Breite B1 vergrößert ist. Dadurch ist der Querspalt 8 geschlossen und ein elektrischer Kontakt zwischen den wenigstens zwei Deformationselemente 7 ausgebildet (Fig. 5 und 6). Sobald die auf die Oberschale 6 einwirkende Kraft aufgehoben wird, drücken die elastisch deformierten Deformationselemente 7 die Oberschale 6 wieder entlang der Hochachse H_{A} zurück, so dass die Deformationselemente 7 von dem Schließzustand wieder in den Trennzustand überführt werden. Unter der Ausbildung des Querspalts 8 sind die Deformationselemente 7 erneut elektrisch voneinander getrennt. Bei einer alternativen Ausführungsform bewirkt die Deformation der Deformationselemente 7 im Wesentlichen keine Zunahme der Abmessung bzw. Breite der Deformationselemente 7 entlang der Querachse Q_{A}, sondern lediglich eine Ausweichbewegung, wie dies z.B. bei einem Knickstab der Fall ist.

Die Unterschale 4 kann formstabil ausgebildet sein. Vorzugsweise ist die Unterschale 4 formnachgiebig. Hierdurch kann ein vollflächiger Kontakt der Unterschale 4 mit dem Außenwandabschnitt 5 des Industrieroboters 3 erreicht werden. Dies gewährleistet eine funktionsgerechte Kraftübertragung im Falle einer Kollision, so dass die Oberschale 6 im Kollisionsfall besonders zuverlässig eine Deformation und damit den Schließzustand bzw. den elektrischen Kontakt der wenigstens zwei Deformationselemente 7 hervorruft.

Die Steuereinheit 9, die mit dem wenigstens einen Schutzelement 1 verbunden ist, ist zum Steuern, insbesondere Abschalten, des Industrieroboters 3 in Abhängigkeit des elektrischen Kontakts des Schutzelements 1 eingerichtet. Vorzugsweise ist die Steuereinheit 9 drahtgebunden oder drahtlos mit dem Schutzelement 1 verbunden. Die besagte Verbindung zwischen der Steuereinheit 9 und dem Schutzelement 1 ist in Fig. 1 lediglich schematisch mittels der dort ersichtlichen durchbrochenen Linie angedeutet.

Bei den gezeigten Ausführungsformen sind die wenigstens zwei Deformationselemente 7 jeweils entlang einer quer zu der Hochachse Ha, und der Querachse Q_{A} orientierten Längsachse L_{A} längserstreckt, wie dies insbesondere in Fig. 4 ersichtlich ist. Die Längsachse L_{A} bildet mit der Hochachse H_{A} und der Querachse Q_{A} ein orthogonales Koordinatensystem. Vorliegend sind die Deformationselemente 7 in regelmäßigen Abständen und zueinander parallel angeordnet. Die Deformationselemente 7 sind vorliegend jeweils im Wesentlichen über eine gesamte Länge des Schutzelements 1 längserstreckt. Dabei weisen vorliegend die Deformationselemente 7 jeweils eine zylindrische, genauer hohlzylindrische, Form auf. Bei einer zeichnerisch nicht dargestellten Ausführungsform kann jeweils entlang der Längsachse L_{A} wenigstens ein weiteres Deformationselement hinter den wenigstens zwei Deformationselemente 7 angeordnet sein. Bei einer weiteren alternativen Ausführungsform können die Deformationselemente 7 jeweils eine elastisch deformierbare Füllstruktur aufweisen, die vorzugsweise gitter-, waben-, wellen-, maschen- und/oder netzartig gestaltet ist.

Bei den in den Fig. 3 bis 7 gezeigten Ausführungsbeispielen weisen die wenigstens zwei Deformationselemente 7 jeweils eine runde, insbesondere kreisrunde, Querschnittsform auf. Vorliegend weisen die Deformationselemente 7 eine kreisringförmige Querschnittsform auf, wie in der Fig. 3 ersichtlich ist. Bei alternativen Ausführungen können die Deformationselemente 7 auch eine elliptische, polygonale oder bogenförmige Querschnittsform aufweisen.

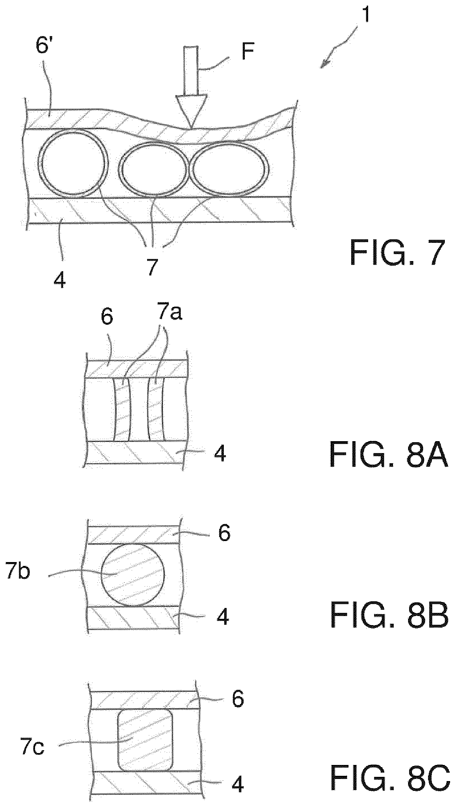

In den Fig. 8A bis 8C sind beispielhaft drei alternative Querschnittsformen eines Deformationselements gezeigt. Die Fig. 8A zeigt zwei bogenförmige Deformationselemente 7a, die unter Krafteinwirkung in der Art eines Knickstabs abknicken bzw. deformieren und dadurch miteinander kontaktieren. In der Fig. 8B ist die Querschnittsform eines Deformationselements 7b vollflächig kreisförmig ausgebildet und die Fig. 8C zeigt ein Deformationselement 7c mit einer im Wesentlichen rechteckigen Querschnittsform.

Bei den gezeigten Ausführungsformen sind die wenigstens zwei Deformationselemente 7 jeweils schichtweise additiv ausgebildet. Hierdurch ist eine besonders flexible Herstellung der Deformationselemente 7 möglich. Dabei können die Deformationselemente 7 mittels 3D-Druck direkt auf die Unterschale 4 aufgedruckt sein. Vorzugsweise ist die Oberschale 6 mittels 3D-Druck auf die Deformationselemente 7 aufgedruckt. Als Werkstoff für die Deformationselemente 7 eignen sich grundsätzlich sämtliche druckbaren und elektrisch leitfähigen Kunststoffwerkstoffe. Bei alternativen Ausführungen können die Deformationselemente 7 auch durch ein hierfür geeignetes Extrusionsverfahren, Spritzgießverfahren oder dergleichen ausgebildet sein.

Bei den gezeigten Ausführungsformen sind die wenigstens zwei Deformationselemente 7 jeweils aus einem elektrisch leitfähigen Kunststoff K1 ausgebildet. Vorliegend weist der Kunststoff K1 einen elektrisch leitfähigen Zuschlagsstoff Z auf (Fig. 3), wie beispielsweise Graphit, Metallpartikel oder dergleichen. Bei zeichnerisch nicht dargestellten Ausführungsformen sind die Deformationselemente 7 wenigstens schicht- und/oder abschnittsweise aus einem elektrisch leitfähigen Material, insbesondere Kunststoff, ausgebildet. Hierbei kann z.B. ein elektrisch isolierendes Material eine elektrisch leitfähige Beschichtung aufweisen.

Bei den gezeigten Ausführungsformen ist die Oberschale 6 und/oder die Unterschale 4 schichtweise additiv ausgebildet. Durch die additive Ausbildung der Unterschale 4 kann deren Gestaltung auf besonders einfache Weise an eine Oberflächenkontur des jeweiligen Außenwandabschnitts 5 des Industrieroboters 3 angepasst werden. Als Werkstoff für die Oberschale 6 und/oder die Unterschale 4 eignen sich grundsätzlich sämtliche druckbaren und elektrisch isolierenden Kunststoffwerkstoffe. Bei alternativen Ausführungen ist die Oberschale 6 und/oder die Unterschale 4 aus einer Plattenware oder aus einem Schaumstoff gefertigt.

Bei den gezeigten Ausführungsformen ist die Oberschale 6 und/oder die Unterschale 4 jeweils aus einem elektrisch isolierenden Kunststoff K2, K3 ausgebildet, wie in der Fig. 3 ersichtlich ist. Hierdurch kann eine ungewollte elektrische Kontaktierung zwischen Deformationselemente 7 vermieden werden. Bei einer alternativen Ausführungsform sind die Oberschale 6 und/oder die Unterschale 4 jeweils wenigstens schicht- und/oder abschnittsweise, insbesondere in Kontaktbereichen zu den Deformationselemente 7, aus einem elektrisch isolierenden Material, insbesondere Kunststoff, ausgebildet.

Bei den gezeigten Ausführungsformen sind die wenigstens zwei Deformationselemente 7 jeweils mit der Oberschale 6 und/oder der Unterschale 4 einstückig zusammenhängend verbunden. Vorliegend ist das gesamte Schutzelement 1 einstückig mittels eines multimateriellen 3D-Druckverfahrens gefertigt. Ein Vorteil dieser Ausführungsform kann sein, dass sich durch die besagte Einstückigkeit des Schutzelements 1 besondere sicherheitstechnische Vorteile gegenüber einer mehrteiligen Ausbildung des Schutzelements 1 ergeben. Eine solche Ausführung des Schutzelements 1 ist vorteilhaft, aber nicht zwingend erforderlich.

Bei der in den Fig. 2 bis 6 gezeigten Ausführungsform ist die Oberschale 6 formstabil, also nicht oder nicht nennenswert elastisch deformierbar. Dies bedeutet, dass bei einer mittig auf die Oberschale 6 einwirkenden Kraft, die Oberschale 6 gleichmäßig auf die Deformationselemente 7 wirkt und diese deformiert. Im Gegensatz dazu ist bei dem in der Fig. 7 gezeigten Ausführungsbeispiel die Oberschale 6' elastisch deformierbar. Eine auf die Oberschale 6' entlang der Hochachse H_{A} einwirkende Druckkraft F führt im Bereich ihres Angriffspunkts zu einer elastischen Deformation der Oberschale 6`. Dies bedingt, dass die Deformationselemente 7 in diesem Bereich elastisch zusammengedrückt werden und sich entlang der Querachse Q_{A} elastisch ausdehnen. Ein Vorteil dieser Ausführungsform kann sein, dass die zur elektrischen Kontaktierung erforderliche Druckkraft F verringert wird. In der Ausführungsform der Fig. 7 ist die Oberschale aus einem elastisch deformierbaren Kunststoff, bevorzugt thermoplastischen Elastomer, ausgebildet.

Bei den gezeigten Ausführungsformen weist die Oberschale 6 eine Gesamtdicke T1 von 1,2 mm auf. Grundsätzlich ist es vorteilhaft, wenn sich die Gesamtdicke T1 von 0,4 mm bis 2,0 mm bewegt. Entsprechendes gilt für eine Gesamtdicke T2 der Unterschale 4. Diese beträgt bei der gezeigten Ausführungsform ebenfalls 1,2 mm. Ein Vorteil dieser Ausführungsform kann sein, dass dadurch die elastische Nachgiebigkeit bzw. Deformierbarkeit der Oberschale 6 bei bereits vergleichsweise geringen Kräften gewährleistet und eine Kollision besonders zuverlässig detektiert wird.

Bei den gezeigten Ausführungsformen sind wenigstens die Oberschale 6 und die wenigstens zwei Deformationselemente 7 aus im weitesten Sinne gleichartigen Kunststoffen K2, K1 ausgebildet, um einen vorteilhaften Stoffschluss zwischen Oberschale 6 und den Deformationselementen 7 zu ermöglichen. Dabei meint "gleichartig" im Hinblick auf die gezeigte Ausführungsform, dass die Kunststoffe K2, K1 eine identische chemische Grundstruktur aufweisen, wobei der Kunststoff K1 im Unterschied zu dem Kunststoff K2 den elektrisch leitfähigen Zuschlagsstoff Z aufweist. Hierdurch wird eine besonders gute Haftung und/oder ein besonders guter Stoffschluss erreicht. Vorliegend sind die Oberschale 6 und die Deformationselemente 7 jeweils aus einem thermoplastischen Elastomer, insbesondere auf Urethanbasis, ausgebildet. Die besagten Kunststoffwerkstoffe haben sich als vorteilhaft im Hinblick auf ihre elastischen Eigenschaften einerseits und ihre Druckbarkeit andererseits erwiesen.

Vorliegend handelt es sich bei dem Kunststoff K3 der Unterschale 4 ebenfalls um einen elektrisch leitfähigen thermoplastischen Elastomer, insbesondere auf Urethanbasis.

Bei den gezeigten Ausführungsformen weist der Kunststoff K2 der Oberschale 6 und/oder der Kunststoff K1 der wenigstens zwei Deformationselemente 7 eine Shorehärte von 35 Shore-A bis 100 Shore-A, vorteilhaft von 70 Shore-A bis 80 Shore-A, besonders vorteilhaft von 75 Shore-A, auf.

Bei den gezeigten Ausführungsformen ist das Schutzelement 1 plattenförmig ausgebildet und weist eine rechteckige Grundform auf. Ein Vorteil dieser Ausführungsform kann sein, dass durch die plattenförmige Ausbildung Bauraum eingespart und eine möglichst schlanke Silhouette des Industrieroboters 3 beibehalten werden kann. Vorliegend sind die Unterschale 4 und die Oberschale 6 parallel zueinander flächig erstreckt. Sowohl die Unterschale 4 als auch die Oberschale 6 sind vorzugsweise im Vergleich zu den übrigen Abmessungen des Schutzelements dünnwandig gestaltet. Vorliegend sind sowohl die Unterschale 4 als auch die Oberschale 6 eben ausgebildet, wie insbesondere in den Fig. 2 und 3 ersichtlich ist. Dabei ist eine Außenseite 61 der Oberschale 6 parallel zu einer Innenseite 62 orientiert. Dementsprechend ist eine Außenseite 41 der Unterschale 4 parallel zu einer Innenseite 42 orientiert.

Es versteht sich, dass das Schutzelement bzw. die Schutzvorrichtung nicht nur für einen Industrieroboter, z.B. in Gestalt eines Gelenkarmroboters, sondern auch für sonstige ortsfeste Einrichtungen, bewegliche Handhabungsgeräte, selbstfahrende Flurförderfahrzeuge oder dergleichen verwendet werden kann.

## Patentansprüche

1. Schutzelement (1) für eine Schutzvorrichtung (2) eines Industrieroboters (3), aufweisend
eine Unterschale (4), welche zum Aufbringen auf einen Außenwandabschnitt (5) des Industrieroboters (3) eingerichtet ist,
eine Oberschale (6, 6`), welche entlang einer Hochachse (H_{A}) von der Unterschale (4) beabstandet angeordnet ist,
wenigstens zwei elastisch deformierbare sowie elektrisch leitfähige Deformationselemente (7, 7a, 7b, 7c), welche entlang einer quer zu der Hochachse (H_{A}) orientierten Querachse (Q_{A}) nebeneinander zwischen der Unterschale (4) und der Oberschale (6, 6`) angeordnet sind und mittels derer die Oberschale (6, 6`) wenigstens abschnittsweise auf der Unterschale (4) abgestützt ist,
wobei die wenigstens zwei Deformationselemente (7, 7a, 7b, 7c) unter Einwirkung einer auf die Oberschale (6, 6`) einwirkenden Kraft elastisch deformierbar sind zwischen
einem Trennzustand, in welchem die wenigstens zwei Deformationselemente (7, 7a, 7b, 7c) entlang der Querachse (Q_{A}) unter Ausbildung eines Querspalts (8) angeordnet und elektrisch voneinander getrennt sind, und
einem Schließzustand, in welchem die wenigstens zwei Deformationselemente (7, 7a, 7b, 7c) jeweils entlang der Hochachse (H_{A}) elastisch zusammengedrückt und entlang der Querachse (Q_{A}) elastisch ausgedehnt sind, wodurch der Querspalt (8) geschlossen und ein elektrischer Kontakt zwischen den wenigstens zwei Deformationselemente (7, 7a, 7b, 7c) ausgebildet ist.

2. Schutzelement (1) nach Anspruch 1, **dadurch gekennzeichnet, dass** die wenigstens zwei Deformationselemente (7, 7a, 7b, 7c) jeweils entlang einer quer zu der Hochachse (H_{A}) und der Querachse (Q_{A}) orientierten Längsachse (L_{A}) längserstreckt sind.

3. Schutzelement (1) nach Anspruch 1 oder 2, **dadurch gekennzeichnet, dass** die wenigstens zwei Deformationselemente (7, 7a, 7b, 7c) jeweils eine runde, insbesondere kreisrunde, Querschnittsform und/oder eine hohle, insbesondere ringförmige, insbesondere kreisringförmige, Querschnittsform aufweisen.

4. Schutzelement (1) nach einem der vorhergehenden Ansprüche, **dadurch gekennzeichnet, dass** die wenigstens zwei Deformationselemente (7, 7a, 7b, 7c) jeweils schichtweise additiv ausgebildet sind.

5. Schutzelement (1) nach einem der vorhergehenden Ansprüche, **dadurch gekennzeichnet, dass** die wenigstens zwei Deformationselemente (7, 7a, 7b, 7c) jeweils aus einem elektrisch leitfähigen Kunststoff (K1) ausgebildet sind.

6. Schutzelement (1) nach einem der vorhergehenden Ansprüche, **dadurch gekennzeichnet, dass** die Oberschale (6, 6`) und/oder die Unterschale (4) schichtweise additiv ausgebildet ist.

7. Schutzelement (1) nach einem der vorhergehenden Ansprüche, **dadurch gekennzeichnet, dass** die Oberschale (6, 6`) und/oder die Unterschale (4) jeweils aus einem elektrisch isolierenden Kunststoff (K2, K3) ausgebildet ist.

8. Schutzelement (1) nach einem der vorhergehenden Ansprüche, **dadurch gekennzeichnet, dass** die wenigstens zwei Deformationselemente (7, 7a, 7b, 7c) jeweils mit der Oberschale (6) und/oder der Unterschale (4) einstückig zusammenhängend verbunden sind.

9. Schutzelement (1) nach einem der vorhergehenden Ansprüche, **dadurch gekennzeichnet, dass** die Oberschale (6`) elastisch deformierbar ist.

10. Schutzelement (1) nach Anspruch 9, **dadurch gekennzeichnet, dass** die Oberschale (6, 6`) eine Gesamtdicke (T1) von 0,4 mm bis 2,0 mm, bevorzugt von 0,8 mm bis 1,6 mm, besonders bevorzugt von 1,2 mm, aufweist.

11. Schutzelement (1) nach einem der vorhergehenden Ansprüche, **dadurch gekennzeichnet, dass** wenigstens die Oberschale (6, 6`) und die wenigstens zwei Deformationselemente (7, 7a, 7b, 7c) aus gleichartigen Kunststoffen (K2, K1) ausgebildet sind, wobei der Kunststoff (K1) der wenigstens zwei Deformationselemente (7, 7a, 7b, 7c) einen elektrisch leitfähigen Zuschlagsstoff (Z) aufweist.

12. Schutzelement (1) nach Anspruch 11, **dadurch gekennzeichnet, dass** der Kunststoff (K2) der Oberschale (6, 6`) und/oder der Kunststoff (K1) der wenigstens zwei Deformationselemente (7, 7a, 7b, 7c) eine Shorehärte von 35 Shore-A bis 100 Shore-A, bevorzugt von 70 Shore-A bis 80 Shore-A, besonders bevorzugt von 75 Shore-A, aufweist.

13. Schutzelement (1) nach einem der vorhergehenden Ansprüche, **dadurch gekennzeichnet, dass** das Schutzelement (1) plattenförmig ausgebildet ist und eine rechteckige Grundform aufweist.

14. Schutzvorrichtung (2) für einen Industrieroboter (3), mit wenigstens einem Schutzelement (1) nach einem der Ansprüche 1 bis 13, und mit einer Steuereinheit (9), die mit dem wenigstens einen Schutzelement (1) verbunden und zum Steuern des Industrieroboters (3) in Abhängigkeit des elektrischen Kontakts des Schutzelements (1) eingerichtet ist.

15. Industrieroboter (3), insbesondere Gelenkarmroboter, mit einer Schutzvorrichtung (2) nach Anspruch 14.
